(19) Europäisches Patentamt
European Patent Office
Office européen des brevets

(11) EP 1 691 440 A1

(12) EUROPEAN PATENT APPLICATION

(43) Date of publication:
**16.08.2006 Bulletin 2006/33**

(51) Int Cl.:
***H01M 8/10*** *(2006.01)* ***H01M 10/40*** *(2006.01)*
***C08J 5/22*** *(2006.01)*

(21) Application number: **06002494.0**

(22) Date of filing: **07.02.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **07.02.2005 JP 2005030797**

(71) Applicant: **FUJI PHOTO FILM CO., LTD.**
**Mianami-Ashigara-shi, Kanagawa 250-0193 (JP)**

(72) Inventor: **Kikuchi, Wataru**
**Minami-ashigara-shi,**
**Kanagawa 250-0193 (JP)**

(74) Representative: **Grünecker, Kinkeldey,**
**Stockmair & Schwanhäusser**
**Anwaltssozietät**
**Maximilianstrasse 58**
**80538 München (DE)**

# (54) Solid electrolyte, method for producing the solid electrolyte, membrane, membrane electrode assembly and fuel cell comprising the solid electrolyte

(57) A solid electrolyte comprising a domain including an acid moiety and a matrix domain, wherein the domain and the matrix domain form 3-dimensional crosslinking structure comprising a carbon-carbon bond of a polymer main chain and polyether crosslink, and the solid electrolyte has ion conductivity of 0.010 S/cm or more, methanol diffusion coefficient of $4 \times 10^{-7}$ $cm^2/s$ of less, tensile strength of 40 MPa or more, and pressure strength of 500 $kgf/cm^2$ or more.

Fig. 1

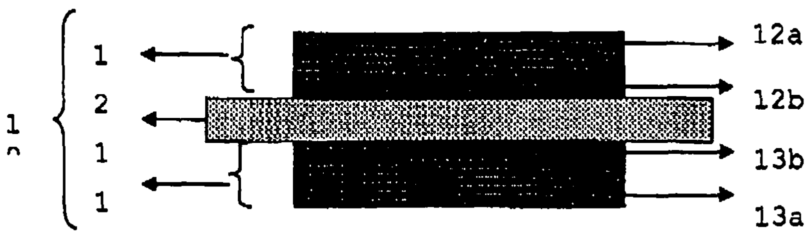


EP 1 691 440 A1

**Description**

BACKGROUND OF THE INVENTION

FIELD OF THE INVENTION

The present invention relates to a polymer solid electrolyte, and particularly to a polymer solid electrolyte having proton conduction ability, a membrane and electrode assembly for fuel cells using alcohols as fuel, and a fuel cell and a method for producing the same.

BACKGROUND ART

Recently, active studies have been performed for lithium-ion batteries and fuel cells that can be employed as a power source of portable devices and the like, and active studies have also been performed for solid electrolytes such as lithium ion conductive materials and proton conductive materials that are members thereof.
A compact size power source for portable devices is extremely preferable if it has the same output power. Among them, a direct methanol type fuel cell has been examined actively, because it does not require auxiliary machines such as a reformer in a reforming-type fuel cell and a high pressure hydrogen tank in a fuel cell using hydrogen fuel, and is easily downsized and has possibility of downsizing more than a lithium-ion battery.
In general, as a proton conductive material, a sulfonic acid group-containing perfluorocarbon polymer as represented by Nafion (registered trademark) is used. However, although it has a high ion conductivity, since a highly polar organic solvent such as methanol also passes through, it leads to low output power in a direct methanol type fuel cell. Further, in order to inhibit the pass of methanol, only an aqueous methanol solution having such low concentration as several % can be used as fuel to lead to a low energy density per unit weight or unit volume, thereby resulting in such problem that it can not be adopted for a compact portable device application. In addition, strength suitable for a process of manufacturing a membrane and electrode assembly and sufficient endurance when used as a fuel cell are also desired. Particularly, in a fuel cell, since hydrogen peroxide generates on power generation, endurance against hydrogen peroxide is important.
Momentum for developing a proton conductive material replacing Nafion (registered trademark) has gathered and some hopeful electrolyte materials have been proposed. For example, there is a proton conductive polymer electrolyte based on a hydrocarbon-based polymer consisting of a liquid crystal type monomer or an ethylene oxide monomer (JP-A-2003-55337, JP-A-2001-29461). Further, as a general polymer electrolyte, there is such electrolyte material that is manufactured by introducing an ion exchange group into a styrene-based resin (JP-A-2000-281609). These polymer conductive materials have such constitution that the polymer main chain thereof is introduced with an acid moiety being a proton conductive site. However, introduction of an acid component to a unit monomer is limited. Further, when a great number of acid moieties are to be introduced in order to increase the proton conductivity of a membrane, mechanical strength of the membrane significantly decreases. On the other hand, although divinyl monomers being a crosslinkable group function as a crosslinking agent, an increased ratio thereof leads to increase in strength and brittleness and decrease in moisture content and degree of swelling thereby decreasing proton conductivity. Thus, it is difficult to obtain a material satisfying these two characteristics. In addition, there is no sufficient description about methanol permeability that is an important characteristic for DMFC application.

DISCLOSURE OF THE INVENTION

The present invention aims to solve the above-described problems, and to provide a solid electrolyte that satisfy both of a high ion conductive property and a low methanol permeability and has sufficient strength. Further, the invention aims to provide a membrane and electrode assembly, and a fuel cell that employ the solid electrolyte.
As the result of the intensive studies, the present inventors found that the above-mentioned problems can be solved according to the following means to accomplish the invention.

(1) A solid electrolyte comprising a domain including an acid moiety and a matrix domain, wherein the domain and the matrix domain form 3-dimensional crosslinking structure comprising a carbon-carbon bond of a polymer main chain and polyether crosslink, and the solid electrolyte has ion conductivity of 0.010 S/cm or more, methanol diffusion coefficient of $4\times10^{-7}$ $cm^2/s$ of less, tensile strength of 40 MPa or more, and pressure strength of 500 $kgf/cm^2$ or more.
(2) The solid electrolyte described in (1), including a repeating unit represented by the formula (1-1) below and a repeating unit represented by the formula (1-2) below:

Formula (1-1)

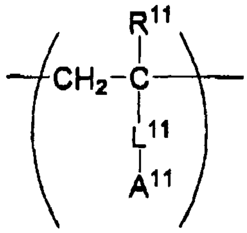

wherein $R^{11}$ represents a hydrogen atom or an alkyl group, $L^{11}$ represents a single bond or a divalent linking group including an alkylene group and/or an arylene group, and $A^{11}$ represents an acid moiety;

Formula (1-2)

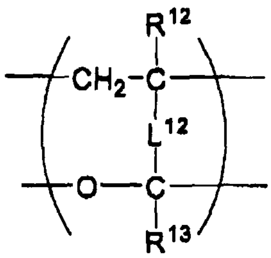

wherein $R^{12}$ represents a hydrogen atom or an alkyl group, $R^{13}$ represents a hydrogen atom, an alkyl group or an aryl group, $L^{12}$ represents a single bond or a divalent linking group including an alkylene group and/or an arylene group.

(3) The solid electrolyte described in (1) or (2) in a membrane form.

(4) A method for producing the solid electrolyte described in any one of (1) to (3), comprising forming a polyether by crosslinking reaction.

(5) The method for producing a solid electrolyte according to (4),

[a] comprising forming a carbon-carbon bond by polymerization reaction and then forming the polyether by crosslinking reaction,

[b] comprising forming a carbon-carbon bond by polymerization reaction, coating the reaction product and then forming the polyether by crosslinking reaction, or

[c] comprising forming a carbon-carbon bond by polymerization reaction, coating and drying the reaction product and then forming the polyether by crosslinking reaction.

(6) A method for producing the solid electrolyte described in any one of (1) to (3), comprising polymerizing a compound represented by the formula (2) below and a compound represented by the formula (3) below:

Formula (2)

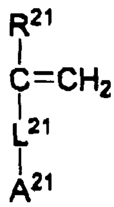

wherein $R^{21}$ represents a hydrogen atom or an alkyl group, $L^{21}$ represents a single bond or a divalent linking group including an alkylene group and/or an arylene group, and $A^{21}$ represents a group including a group derivable to an

acid moiety;

Formula (3)

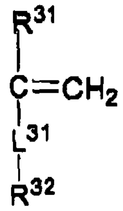

wherein $R^{31}$ represents a hydrogen atom or an alkyl group, $L^{31}$ represents a single bond or a divalent linking group including an alkylene group and/or an arylene group, and $R^{32}$ represents a polymerizable group capable of forming a carbon-oxygen bond.

(7) A method for producing a solid electrolyte described in any one of (1) to (3), comprising crosslinking a polymerizable compound including a repeating unit represented by the formula (4-1) below and a repeating unit represented by the formula (4-2) below:

Formula (4-1)

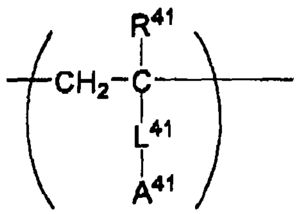

wherein $R^{41}$ represents a hydrogen atom or an alkyl group, $L^{41}$ represents a single bond or a divalent linking group including an alkylene group and/or an arylene group, and $A^{41}$ represents an acid moiety;

Formula (4-2)

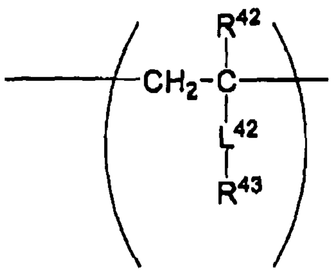

wherein $R^{42}$ represents a hydrogen atom or an alkyl group, $R^{43}$ represents a polymerizable group capable of forming a carbon-oxygen bond, $L^{42}$ represents a single bond or a divalent linking group including an alkylene group and/or arylene group.

(8) The method for producing a solid electrolyte described in (7), wherein the polymerizable compound has a weight-average molecular weight of 3000 or more.

(9) A membrane and electrode assembly comprising a pair of electrodes and the solid electrolyte described in any one of (1) to (3) arranged between the electrodes.

(10) A fuel cell comprising the membrane and electrode assembly described in (9).

In the invention, by employing the solid electrolyte, a high ion conductivity and a low methanol permeability can be satisfied, and, for example, manufacture of a membrane and electrode assembly becomes easy. In particular, by employing the solid electrolyte including repeating units represented by the formulae (1-1) and (1-2), enhancement

in bond strength is resulted in, which leads to increase in strength in the directions parallel and perpendicular to the membrane face. As the result, strength and endurance are enhanced and a high compatibility to a process for manufacturing a fuel cell can be expected.

BRIEF DESCRIPTION OF THE DRAWINGS

Fig. 1 is a schematic cross-sectional view showing structure of a Membrane and Electrode Assembly using the solid electrolyte membrane of the invention.
Fig. 2 is a schematic cross-sectional view showing an example of structure of the fuel cell of the invention.
Fig. 3 shows a schematic drawing of a stainless cell employed for measuring methanol diffusivity of the solid electrolyte membrane of the invention.

DESCRIPTION OF THE PREFERRED EMBODIMENTS

Hereinafter, the content of the invention will be described in detail. In this connection, in the specification of the application concerned, "-" is used in such meaning that numeric values described at before and after it are included as the lower limit and the upper limit, respectively. Various physical property values in the invention represent those of the state at room temperature (for example, 25°C) unless otherwise noted. Further, polymerization in the invention is intended to include so called co-polymerization, too. Accordingly, polymer referred to in the invention is intended to include co-polymer, too. In addition, in the specification of the application concerned, sometimes an acetyl group is shown as Ac, an ethyl group as Et, a methyl group as Me, a butyl group as Bu, and a phenyl or phenylene group as Ph.
The methanol diffusion coefficient as mentioned in the invention refers to a methanol diffusion coefficient obtained by contacting one side of a solid electrolyte to a 50 wt% aqueous methanol solution and the other side thereof to air, unless otherwise noted. "Membrane" in the invention is intended to include one in a board form, a flat plane form or the like.
A greater ion conductivity of the solid electrolyte of the invention renders an internal resistance of a battery smaller, and is preferable. Specifically, an ion conductivity of 0.010 S/cm or more is preferable, and 0.015 S/cm or more is more preferable at 25°C and 95 %RH. A smaller methanol diffusion coefficient of the solid electrolyte of the invention renders output loss of a battery smaller, and is preferable. In a direct methanol type fuel cell, one side of a solid electrolyte contacts with an aqueous methanol solution as fuel and the other side thereof contacts with air, In this state, a methanol diffusion coefficient of $4\times10^{-7}$ $cm^2/s$ or less is preferable, and $3\times10^{-7}$ $cm^2/s$ is more preferable at 25°C. A greater strength of the solid electrolyte of the invention results in a greater degree of freedom in a production process of a battery and a higher endurance, and is preferable. It may be determined according to JIS K-7127, but a sample size may be changed suitably. A strength of 40 MPa or more is preferable, and 45 MPa or more is more preferable at 25°C. As for pressure strength, 500 $kgf/cm^2$ or more is preferable, and 550 $kgf/cm^2$ is more preferable.
As for the solid electrolyte of the invention, one forming a higher-order structure of a domain including an acid moiety and a matrix domain is more preferable. As the higher-order structure, micro phase separation structure, lamellar phase, hexagonal phase, and a mixture or intermediate state thereof can be mentioned as preferable examples. These can be checked by optical microscopic observation, an X-ray light scattering measuring method and the like.
Further, as for the solid electrolyte of the invention, a solid electrolyte having a stable percentage of water absorption and percentage of moisture content is preferable.
In addition, solubility of the solid electrolyte into alcohols, water and mixed solvents thereof at a substantially negligible degree is preferable. Furthermore, also decrease in weight and change in form thereof at a substantially negligible degree when dipped in the solvent is preferable.
When formed into a membrane form, preferably the ion conductivity in the direction from the front face to the rear face is higher than that in other directions. It is essentially determined, of course, according to a ratio to a methanol permeability, and it may be random.
As for the upper temperature limit of the solid electrolyte of the invention, 200°C or more is preferable, 250°C or more is more preferable, and 300°C or more is particularly preferable. The upper temperature limit can be defined, for example, based on a time period until decrease in weight reaches 5% by heating at a rate of 1 °C/min. The decrease in weight is calculated while excluding an evaporated amount of water etc.
As for the solid electrolyte of the invention, in particular, one including a repeating unit represented by the formula (1-1) and a repeating unit represented by the formula (1-2) is preferable. Such solid electrolyte can be produced, for example, by performing polymer formation, membrane formation, crosslinking, ion exchange reaction and the like of a compound represented by the formula (2) and a compound represented by the formula (3). Particularly, it can be produced more preferably by using a polymerizable compound including a repeating unit represented by the formula

(4-1) and a repeating unit represented by the formula (4-2), for example, as an intermediate.

Hereinafter, detailed description will be given about these.

Repeating unit represented by the formula (1-1)

In the formula (1-1), $R^{11}$ represents a hydrogen atom or an alkyl group. Examples of preferable alkyl groups include a straight chain, branched chain or cyclic alkyl group (an alkyl group having 1-20 carbon atoms is preferable, and an alkyl group having 1-6 carbon atoms is more preferable. Specific examples thereof include a methyl group, an ethyl group, an isopropyl group, a n-butyl group, a 2-ethylhexyl group, a n-decyl group, a cyclopropyl group, a cyclohexyl group, a cyclododecyl group, etc.). As $R^{11}$, a hydrogen atom is preferable.

$L^{11}$ represents a single bond or a divalent linking group including an alkylene group and/or an arylene group; and a divalent linking group including at least an alkylene group is more preferable. As for an alkylene group, a straight chain or branched chain alkylene group (for example, one having 1-12 carbon atoms) is preferable. Specific examples thereof include a methylene group, an ethylene group, a propylene group, a butylene group, a hexylene group, an isobutylene group, a n-decylene group and the like. As for an arylene group, a substituted or unsubstituted phenylene group having 6-20 carbon atoms and a substituted or unsubstituted naphthalene group having 12-28 carbon atoms can be mentioned. As $L^{11}$, in particular, one composed of a combination of an alkylene group and -O- and/or -S-, and a combination of an alkylene group or an arylene group and -O- and/or -S- are particularly preferable. Further, one including these and a mesogen described later is also preferable. Specific examples of $L^{11}$ include a methylene group, an ethylene group, a propylene group, a butylene group, a hexylene group, an octylene group, a decylene group, a phenylene (-Ph-) group, -O- $(CH_2)_n$- (n is an integer, preferably an integer of 1-6), $-CH_2$-Ph-, $-CH_2CH_2OCH_2CH_2-$,$-(CH_2CH_2O)_2CH_2CH_2-$, and combinations of these and at least one of -O- and -S-.

$L^{11}$ may be an organic atomic group including a mesogen. Preferable examples of mesogen include ones described in "Flussige Kristallein Tabellen II", 1984, p.7-18 by Dietrich Demus and Horst Zaschke. Among these, ones represented by the formula (5) below are preferable.

Formula (5)

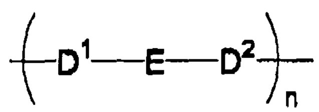

In the formula (5), each of $D^1$ and $D^2$ represents a divalent linking group or a single bond. Preferable examples of the divalent linking group include -CH=CH-, -CH=N-, -N=N-, -N (0) =N-, -COO-, -COS-, -CONH-, $-COCH_2-$, $-CH_2CH_2-$, $-OCH_2-$, $-CH_2NH-$, $-CH_2-$, -CO-, -O-, -S-, -NH-, $-(CH_2)_{1-3}-$, -CH=CH-COO-, -CH=CH-CO-, - $(C{\equiv}C)_{1-3}$-, combinations thereof and the like. $-CH_2-$, -CO-, -O-, -CH=CH-, -CH=N-, -N=N-, combinations thereof and the like are more preferable. In these divalent linking groups, a hydrogen atom may have been substituted with other substituent. As a substituent in this case, one included in following groups T of substituent is preferable. Groups T of substituent

1. Alkyl group
The alkyl group may have a substituent. It is more preferably an alkyl group having 1-24 carbon atoms, and furthermore preferably 1-10 carbon atoms, and may be of a straight chain or a branched chain. Examples thereof include a methyl group, an ethyl group, a propyl group, a butyl group, an i-propyl group, an i- butyl group, a pentyl group, a hexyl group, an octyl group, a 2-ethylhexyl group, a t-octyl group, a decyl group, a dodecyl group, a tetradecyl group, a 2-hexyldecyl group, a hexadecyl group, an octadecyl group, a cyclohexylmethyl group, an octylcyclohexyl group and the like.
2. Aryl group
The aryl group may include a substituent or be a condensed ring. More preferably it is an aryl group having 6-24 carbon atoms, including, for example, a phenyl group, a 4-methylphenyl group, a 3-cyanophenyl group, a 2-chlorophenyl group, a 2-naphthyl group and the like.
3. Heterocyclic group
The heterocyclic group may have a substituent or be a condensed ring. When it is a nitrogen-containing heterocyclic group, a nitrogen in the ring may be quaternized. More preferably, it is a heterocyclic group having 2-24 carbon atoms, including, for example, a 4-pyridyl group, a 2-pyridyl group, a 1-octylpyridinium-4-yl group, a 2-pyrimidyl group, a 2-imidazolyl group, a 2-thiazolyl group and the like.
4. Alkoxy group

An alkoxy group having 1-24 carbon atoms is more preferable, including, for example, a methoxy group, an ethoxy group, a butoxy group, an octyloxy group, a methoxyethoxy group, a methoxypenta(ethyloxy) group, an acryloyloxyethoxy group, a pentafluoropropoxy group and the like.

5. Acyloxy group

An acyloxy group having 1-24 carbon atoms is more preferable, including, for example, an acetyloxy group, a benzoyloxy group and the like.

6. Alkoxycarbonyl group

An alkoxycarbonyl group having 2-24 carbon atoms is more preferable, including, for example, a methoxycarbonyl group, an ethoxycarbonyl group and the like.

7. Cyano group

8. Fluoro group

9. Alkoxycarbonyl group

E represents a divalent linking group of a 4-7 membered ring, or a divalent linking group of a condensed ring composed of 4-7 membered rings; and n represents an integer of 1-3. Preferably, E is a 6-membered aromatic group, a 4-6 membered saturated or unsaturated aliphatic group, a 5- or 6-membered heterocyclic group, or a condensed ring thereof. As specific examples, a substituent represented by (Y-1) - (Y-28) shown below, and combinations thereof (including condensed rings) can be mentioned. Among these substituents, (Y-1), (Y-2), (Y-18), (Y-19), (Y-21), (Y-22) and combinations thereof (including condensed rings) are more preferable, and (Y-1), (Y-2), (Y-19) and combinations thereof are furthermore preferable.

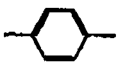
(Y-1)

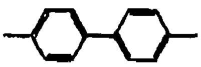
(Y-2)

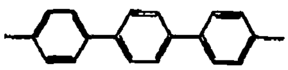
(Y-3)

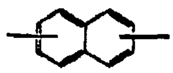
(Y-4)

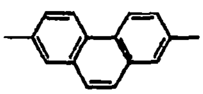
(Y-5)

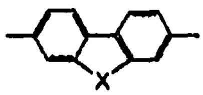
X = $CH_2$,O,CO,NH
(Y-6)

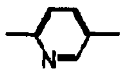
(Y-7)

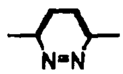
(Y-8)

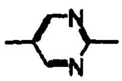
(Y-9)

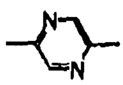
(Y-10)

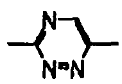
(Y-11)

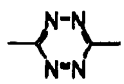
(Y-12)

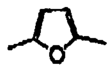
(Y-13)

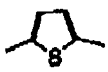
(Y-14)

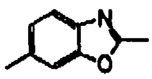
(Y-15)

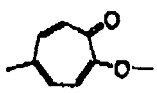
(Y-16)

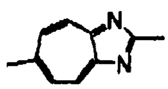
(Y-17)

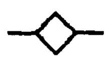
(Y-18)

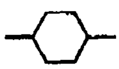
(Y-19)

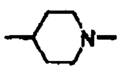
(Y-20)

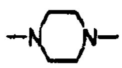
(Y-21)

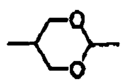
(Y-22)

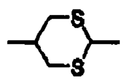
(Y-23)

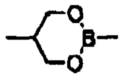
(Y-24)

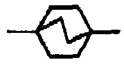
(Y-25)

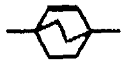
(Y-26)

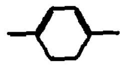
(Y-27)

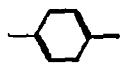
(Y-28)

$A^{11}$ represents an acid moiety. As the acid moiety, acid moieties having pKa of 5 or less are preferable, and ones having pka of 2 or less are more preferable. Specifically, a sulfonic acid moiety, a phosphonic acid moiety and a carboxylic acid moiety are preferable, and a sulfonic acid moiety is more preferable.

When 2 or more of the repeating unit represented by the formula (1-1) are included, respective $R^{11}$s, $L^{11}$s and $A^{11}$s may be same with or different from each other. Repeating unit represented by the formula (1-2)

In the formula (1-2), $R^{12}$ represents a hydrogen atom or an alkyl group, having the same meaning as $R^{11}$, and also the same preferable range. $R^{13}$ represents a hydrogen atom, an alkyl group or an aryl group, wherein, as the alkyl group, a straight chain, branched chain or a cyclic alkyl group having 1-5 carbon atoms (more preferably 1-3 carbon atoms) is preferable, and a methyl group, an ethyl group, a propyl group, and a butyl group are preferable. $L^{12}$ represents a single bond or a divalent linking group including an alkylene group and/or an arylene group, having the same meaning as $L^{11}$, and also the same preferable range.

When 2 or more of the repeating unit represented by the formula (1-2) are included, respective $R^{12}$s, $L^{12}$s and $R^{13}$s may be same with or different from each other.

As for the repeating unit represented by the formula (1-1) and the repeating unit represented by the formula (1-2), for example, a compound represented by the formula (2) described below and a compound represented by the formula (3) below polymerize, in which a substituent $R^{32}$ will form the carbon-oxygen bond structure of the solid electrolyte of the invention. In the invention, the solid electrolyte is preferably produced by using a compound represented by the formula (2) and a compound represented by the formula (3). When a compound represented by the formula (2) and a compound represented by the formula (3) copolymerize, any of random copolymerization, block copolymerization and graft copolymerization may be acceptable, but random copolymerization is preferable.

Compounds represented by the formula (2)

In the formula (2), $R^{21}$ represents a hydrogen atom or an alkyl group. $R^{21}$ has the same meaning and also the same preferable range as $R^{11}$.

$L^{21}$ represents a single bond or a divalent linking group including an alkylene group and/or an arylene group, having the same meaning and also the same preferable range as $L^{11}$.

$A^{21}$ represents a group including a group derivable to an acid moiety. The group including a group derivable to an acid moiety is preferably one that is derivable to an acid moiety through reaction by an acidic aqueous solution.

Examples of the salt of the acid moiety include an alkali metal atom and an alkylammonium. Li, Na, K, Cs, $NMe_4$ and $MeBu_4$ are preferable, and Li, Na and $NMe_4$ are more preferable.

The total carbon number of a compound represented by the formula (2) is preferably 5-100, more preferably 8-80, and furthermore preferably 8-30.

The molecular weight of a compound represented by the formula (2) is preferably 100-800.

Hereinafter, compounds represented by the formula (2) are exemplified, but the invention is not limited to these.

A-1 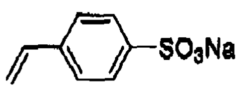

A-4 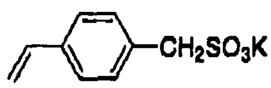

A-2 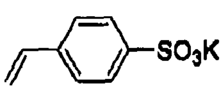

A-5 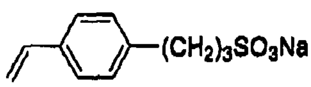

A-3 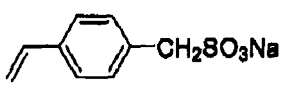

A-6 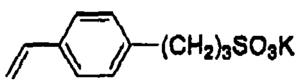

A-7
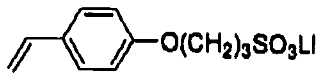

A-8
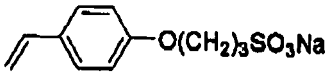

A-9
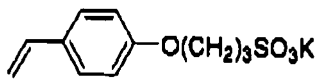

A-10
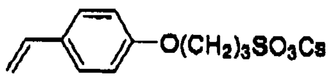

A-11
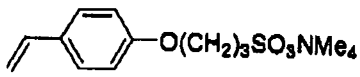

A–12
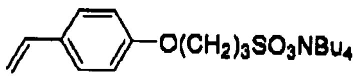

A-13
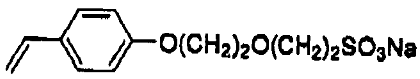

A–14
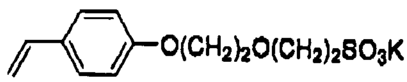

A-15
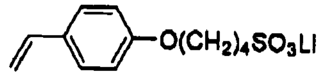

A-16
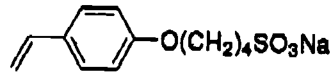

A-17
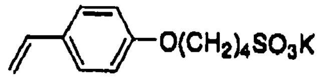

A-18
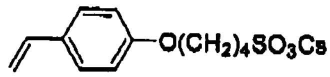

A-19
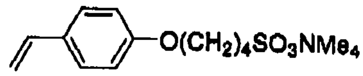

A–20
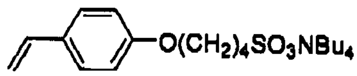

A–21
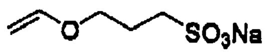

A–22
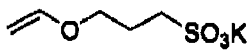

A-23
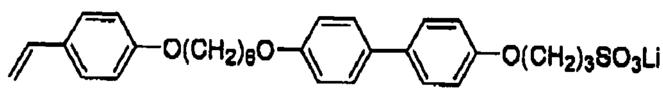

A-24
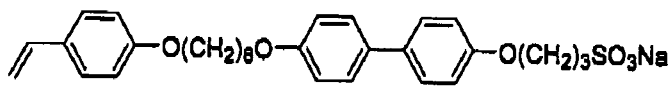

A-25
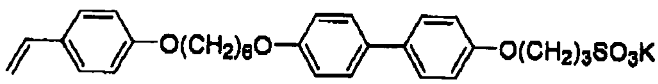

A-26

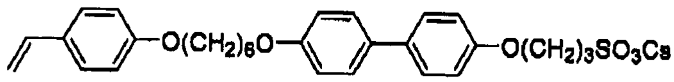

A-27

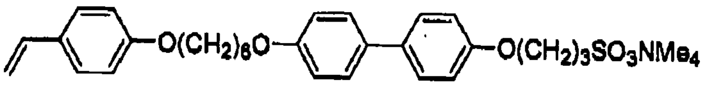

A-28

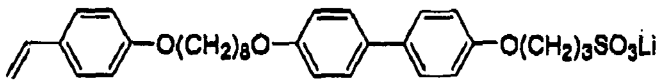

A-29

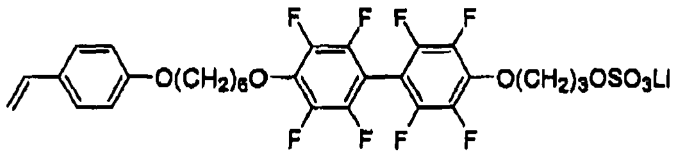

A-30

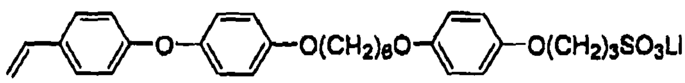

Compounds represented by the formula (3)

In the formula (3), $R^{31}$ represents a hydrogen atom or an alkyl group. $R^{31}$ has the same meaning and also the same preferable range as $R^{21}$.

$L^{31}$ represents a single bond or a divalent linking group including an alkylene group and/or an arylene group. $L^{31}$ has the same meaning and also the same preferable range as $L^{12}$.

$R^{32}$ represents a polymerizable group capable of forming a carbon-oxygen bond, in which a cyclic alkyleneoxide group is preferable, a cyclic alkyleneoxide group having 1-6 carbon atoms is more preferable, and an epoxy group or an oxetanyl group is furthermore preferable. These groups may have a substituent, the substituent having the same meaning and the same preferable range as $R^{13}$.

The total carbon number of a compound represented by the formula (3) is preferably 5-100, more preferably 8-80, and furthermore preferably 8-50.

The molecular weight of a compound represented by the formula (3) is preferably 100-1000.

Hereinafter, compounds represented by the formula (3) are exemplified, however the invention is not restricted to these.

B-1

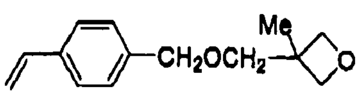

B-2

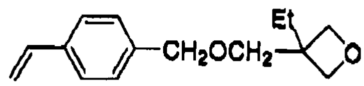

B-3

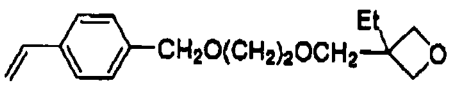

B-4

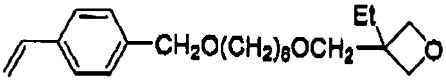

B-5

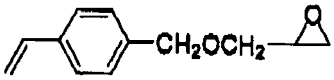

B-6

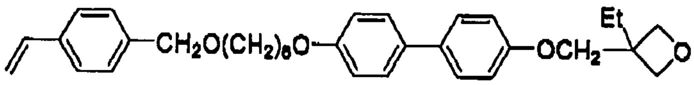

B-7

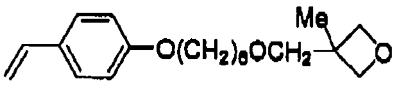

B-8

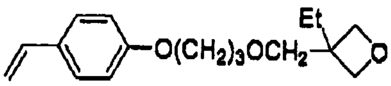

B-9

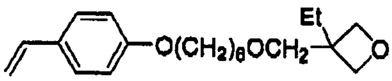

B-10

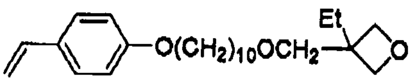

B-11

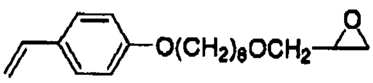

B-12

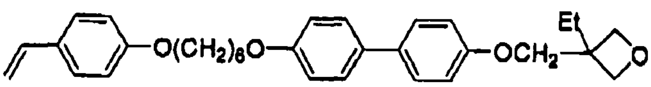

B-13

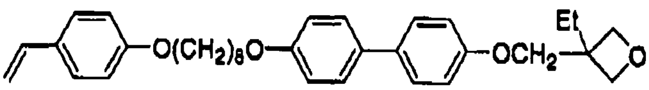

B-14

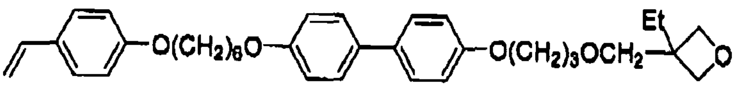

B-15 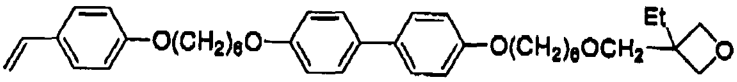

B-16 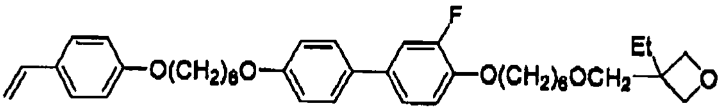

B-17 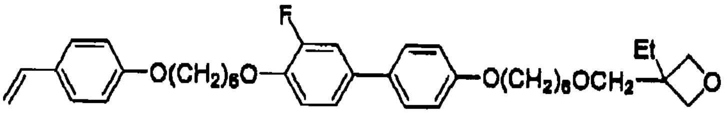

B-18 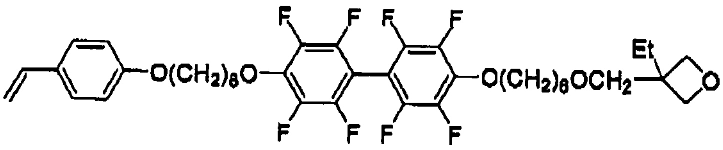

B-19 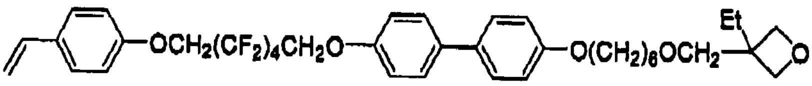

B-20 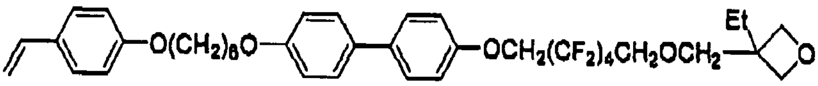

B-21 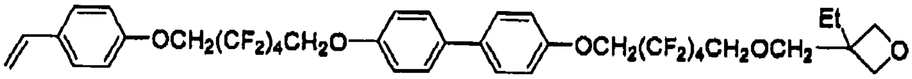

B-22 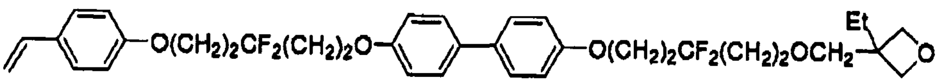

B-23 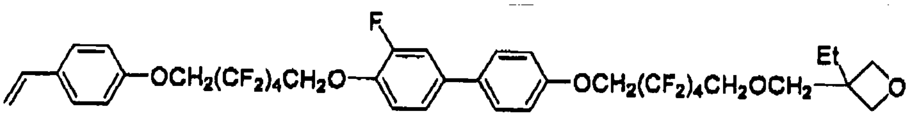

B-24 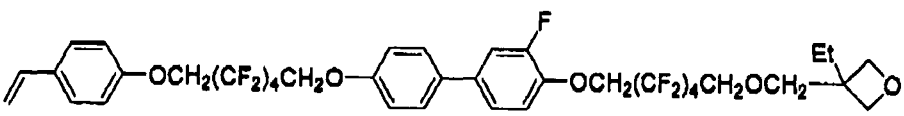

B-25 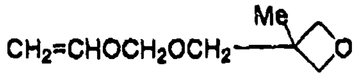

B-26 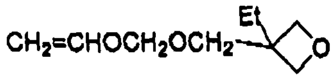

B-27 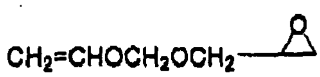

B-28 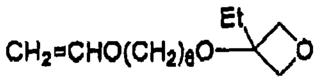

B-29 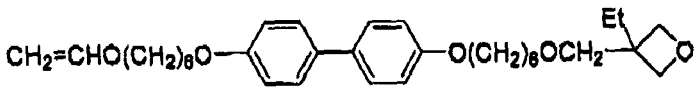

B-30 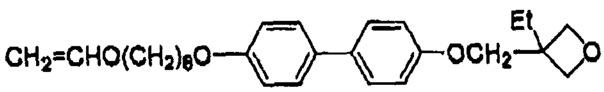

B-31 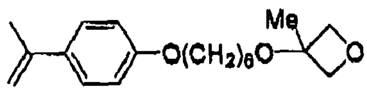

B-32 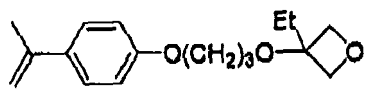

B-33 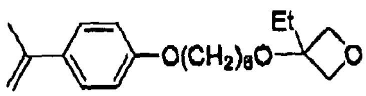

B-34 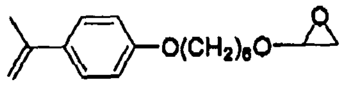

B-35 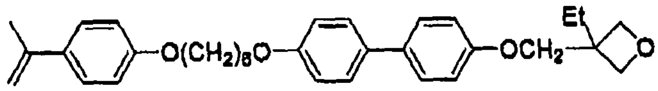

B-36 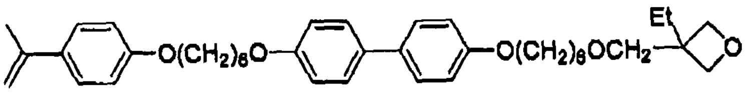

In this connection, the ratio of a compound represented by the formula (2) and a compound represented by the formula (3) is, by molar ratio, preferably 0.5-3:3-0.5, and more preferably 1-2.5:1. Polymerizable compounds including a repeating unit represented by the formula (4-1) and a repeating unit represented by the formula (4-2)

In the invention, use of a polymerizable compound including a repeating unit represented by the formula (4-1) and a repeating unit represented by the formula (4-2) is preferable. That is, it is preferable that the polymerizable compound is gone through as an intermediate as the result of above-mentioned polymerization, derivation to sulfonic acid, and derivation to a polymerizable group.

In the formula (4-1), $R^{41}$ represents a hydrogen atom or an alkyl group, having the same meaning and also the same preferable range as $R^{11}$. $L^{41}$ represents a single bond or a divalent linking group including an alkylene group and/or an arylene group, having the same meaning and also the same preferable range as $L^{11}$.

$A^{41}$ represents an acid moiety, having the same meaning and also the same preferable range as $A^{11}$.

In the formula (4-2), $R^{42}$ represents a hydrogen atom or an alkyl group, having the same meaning and also the same preferable range as $R^{12}$. $R^{43}$ represents a polymerizable group capable of generating a carbon-oxygen bond, having the same meaning and also the same preferable range as $R^{32}$. $L^{42}$ represents a single bond or a divalent linking group including an alkylene group and/or an arylene group, having the same meaning and also the same preferable range as $L^{12}$.

The weight-average molecular weight of the polymerizable compound including a repeating unit represented by the formula (4-1) and a repeating unit represented by the formula (4-2) is preferably 3000 or more, more preferably 10,000 or more, and furthermore preferably 15,000-80,000. Other components of the solid electrolyte

To the solid electrolyte of the invention, an antioxidant, fiber, fine particles, a water-absorbing agent, a plasticizer, a compatibilizer or the like may be added, if necessary, in order to improve membrane properties. The content of these additives is preferably in the range of 1-30% by mass based on the total amount of the solid electrolyte.

Preferable examples of the antioxidant include respective compounds based on (hindered) phenol, mono- or di-valent sulfur, trivalent phosphorous, benzophenone, benzotriazole, hindered amine, cyanoacrylate, salicylate and oxalic acid anilide. Specifically, compounds described in JP-A-8-53614, JP-A-10-101873, JP-A-11-114430, JP-A-2003-151346 can be mentioned.

As for the fiber, preferable examples include perfluorocarbon fiber, cellulose fiber, glass fiber, polyethylene fiber and the like. Specifically, fibers described in JP-A-10-312815, JP-A-2000-231928, JP-A-2001-307545, JP-A-2003-317748, JP-A-2004-63430 and JP-A-2004-107461 can be mentioned.

As for the fine particle, preferable examples include fine particles composed of silica, alumina, titanium oxide, zirconium oxide and the like. Specifically, fine particles described in JP-A-6-111834, JP-A-2003-178777 and JP-A-2004-217921 can be mentioned.

As for the water-absorbing agent (hydrophilic material), preferable examples include crosslinked polyacrylate, starch-acrylate, poval, polyacrylonitrile, carboxymethyl cellulose, polyvinyl pyrrolidone, polyglycol dialkylether, polyglycol dialkylester, silica gel, synthetic zeolite, alumina gel, titania gel, zirconia gel and yttria gel. Specifically, water-absorbing agents described in JP-A-7-135003, JP-A-8-20716 and JP-A-9-251857 can be mentioned.

As for the plasticizer, preferable examples include phosphate ester-based compounds, phthalic ester-based compounds, aliphatic monobasic acid ester-based compounds, aliphatic dibasic acid ester-based compounds, dihydric alcohol ester-based compounds, oxyacid ester-based compounds, chlorinated paraffins, alkylnaphthalene-based compounds, sulfonalkylamide-based compounds, oligoethers, carbonates and aromatic nitriles. Specifically, plasticizers described in JP-A-2003-197030, JP-A-2003-288916 and JP-A-2003-317539 can be mentioned.

Further, in the solid electrolyte of the invention, various kinds of polymer compounds may be incorporated for the purpose of (1) increasing mechanical strength of the membrane and (2) increasing acid concentration in the membrane.

(1) For the purpose of increasing the mechanical strength, a polymer compound having molecular weight of around 10,000-1,000,000 and good compatibility with the solid electrolyte of the invention is suitable. Preferable examples

include perfluorinated polymer, polystyrene, polyethylene glycol, polyoxetane, poly(meth)acrylate, polyetherketon, polyether sulfone, and copolymers of 2 or more of these. Preferable content thereof falls within 1-30% by mass based on the total amount.

As for a compatibilizer, one having a boiling point or a sublimation point of 250°C or more is preferable, and one having that of 300°C or more is more preferable. Specifically, those described as a solvent for a first reaction process of the method for producing the solid electrolyte described later can be used preferably.

(2) For the purpose of increasing acid concentration, polymer compounds having a protonic acid site such as perfluorocarbon sulfonic acid polymer as represented by Nafion, poly (meth) acrylate having a phosphate group in the side chain, and a sulfonated compound of heat-resistant aromatic polymers such as sulfonated polyetheretherketone, sulfonated polyether sulfone, sulfonated polysulfone, sulfonated polybenzimidazole are preferable. Preferable content thereof falls within 1-30% by mass based on the total amount.

Furthermore, when the solid electrolyte of the invention is used for a fuel cell, an active metal catalyst for facilitating the oxidation-reduction reaction of an anode fuel and a cathode fuel may be added. As the result, fuels permeated into the solid electrolyte are consumed in the solid electrolyte without reaching the other electrode, whereby crossover can be prevented. An active metal type to be used can not be restricted as long as it functions as an electrode catalyst, but platinum or an alloy based on platinum is suitable.

Method for producing the solid electrolyte

The solid electrolyte of the invention can be manufactured, for example, through 4 steps, that is, a first reaction process, a membrane-forming process, a second reaction (crosslinking) process, and an ion-exchange process.

(First reaction process)

In a first reaction process, for example, a compound represented by the formula (2) and a compound represented by the formula (3) are polymerized by polymerization reaction. The polymerization may employ any reaction scheme such as radical polymerization, cationic polymerization, anionic polymerization and coordination polymerization. For details of respective polymerization methods, a common method ("Shin Jikken Kagaku Koza (New Course of Experimental Science), "vol. 19-1, p. 27-115 (1978) Maruzen) can be applied.

A polymerization initiator in the first reaction process can be suitably selected according to the polymerization scheme. When radical polymerization is employed, examples of the preferable thermal polymerization initiator include azo-based initiators such as 2,2'-azobis(isobutyronitrile), 2,2'-azobis(2,9-dimethylvaleronitrile), dimethyl-2,2'-azobis(2-methylpropionate), 1,1-azobie(cyclohexene-1-carbonitrile), 2,2-azobis(N-cyclohexyl-2-methylpropioamide), and a peroxide-based initiator such as benzoylperoxide, and the like. Among them, 2,2'-azobis(isobutyronitrile), 1,1'-azobia(cyclohexene-1-carbonitrile), 2,2'-azobis(N-cyclohexyl-2-methylpropioamide) and benzoylperoxide are preferable, and 2,2'-azobis(isobutyronitrile) or 1,1-azobis(cyclohexene-1-carbonitrile) is more preferable. Preferable examples of the photopolymerization initiator include $\alpha$-carbonyl compounds, acyloin ether, $\alpha$-hydrocarbon-substituted aromatic acyloin compounds, polynuclear quinone compounds, a combination of triarylimidazole dimer and p-aminophenyl ketone, acridine compounds, phenazine compounds and oxadiazole compounds.

Examples of the initiator for cationic polymerization include protonic acids (preferably perchloric acid, fluorosulfuric acid, trifluoromethanesulfonic acid, phosphomolybdic acid, tungstophosphoric acid etc.), super strong acid esters (trifluoromethane sulfonic acid methylester, fluorosulfuric acid methylester etc.), super strong acid anhydrides (trifluoromethane sulfonic acid anhydride, fluorosulfuric acid anhydride etc.), Lewis acids (boron trifluoride (including ether complex), antimony pentafluoride, phosphorus pentafluoride, zinc chloride, aluminum chloride etc.), oxonium salts (triethyloxonium tetrafluoroborate etc.), iodonium salts (phenyliodonium hexafluorophosphate etc.), sulfonium salts (diphenylmethylsulfonium tetrafluoroborate, triphenylsulfonium hexafluorophosphate etc.) and the like. Preferable examples include trifluoromethane sulfonic acid, trifluoromethane sulfonic acid methylester, boron trifluoride (including ether complex), iodonium salts and oxonium salts, and more preferable examples include trifluoromethane sulfonic acid, trifluoromethane sulfonic acid methylester, boron trifluoride (including ether complex), diphenylmethylsulfonium tetrafluoroborate and triphenylsulfonium tetrafluoroborate.

For anionic polymerization, organic metal compounds such as alkyllithium, sodium naphthalene, Grignard reagent, alkali metal alkoxides are preferable. Among them, use of alkyllithium or an alkali metal alkoxide for the polymerization is preferable.

A solvent for use in the first reaction process is not particularly limited unless it inhibits the polymerization. Preferably usable examples thereof include carbonate compounds (ethylene carbonate, propylene carbonate etc.), heterocyclic compounds (3-methyl-2-oxazolidinone, N-methyl pyrrolidone etc.), cyclic ethers (dioxane, tetrahydrofuran etc.), chain ethers (diethylether, ethylene glycol dialkyl ether, propylene glycol dialkyl ether, polyethylene glycol dialkylether, polypropylene glycol dialkylether etc.), alcohols (methanol, ethanol, isopropanol, ethylene glycol monoalkyl ether, propylene glycol monoalkyl ether, polyethylene glycol monoalkyl ether, polypropylene glycol monoalkyl ether etc.), polyhydric alcohols (ethylene glycol, propylene glycol, polyethylene glycol, polypropylene glycol, glycerin etc.), nitrile compounds (acetonitrile, glutarodinitrile, methoxyacetonitrile, propionitrile, benzonitrile etc.), esters (carboxylic acid esters, phosphoric acid esters, phosphonic acid esters etc.), aprotic polar solvents (dimethylsulfoxide, sulfolane, dimethylformamide (DMF), dimethylacetamide etc.), nonpolar solvents (toluene, xylene etc.), chlorine-containing solvents (methylene chloride, ethylene chloride etc.), water and the like. Among these, cyclic ethers, alcohols, nitrile compounds and aprotic polar solvents are preferable, and ethanol, isopropanol, fluorine-substituted alcohols, acetonitrile, glutarodinitrile, methoxyacetonitrile, propionitrile, benzonitrile, dioxane, tetrahydrofuran and DMF are particularly preferable. Either individual use or combined use of 2 or more kinds thereof may be acceptable.

As for reaction temperature of the first reaction process, selection of a suitable temperature in accordance with the polymerization reaction is preferable. For radical polymerization, it is preferably 20°C-200°C, more preferably 40°C-180°C, and furthermore preferably 60°C-120°C. For cationic polymerization and anionic polymerization, it is preferably -200°C-300°C, more preferably -100°C-250°C, and furthermore preferably -50°C-200°C. For coordination polymerization, it is preferably -50°C-200°C, more preferably 0°C-1.20°C, and furthermore preferably 20°C-80°C.

In the first reaction process, practice of stopping operation is preferable, which can be accomplished by cooling, dilution or addition of a polymerization inhibitor (phenols, alcohols, water, oxygen, amines, basic compounds, or acidic compounds). The generated polymer may be taken out after the first reaction process, or may be subjected to an additional purification process.

(Membrane-forming process)

A membrane-forming process includes such operations that the obtained reaction liquid is flow-cast or coated, and that the solvent is removed to be dried.

A support used for coating the reaction liquid is not particularly restricted, but preferable examples thereof include a glass substrate, a metal substrate, a polymer film, a reflection plate, and the like. Examples of the polymer film include a cellulose-based polymer film such as triacetyl cellulose (TAC), ester-based polymer films such as polyethylene terephthalate (PET) and polyethylene naphthalate (PEN), a fluorine-containing polymer films such as polytrifluoroethylene (PTFE), a polyimide film and the like, and a fluorine-containing polymer film is preferable. Coating scheme may be selected from publicly known methods and, for example, a curtain coating method, an exclusion coating method, a roll coating method, a spin coating method, a dip coating method, a bar coating method, a spray coating method, a slide coating method and a print coating method may be usable.

Drying temperature in the coating process relates to the drying speed, and can be selected in accordance with properties of the material. It is preferably -20°C-150°C, more preferable 20°C-120°C, and furthermore preferably 50°C-100°C. A shorter drying time is preferable from the viewpoint of productivity, however, a too short time tends to easy generation of such defects as bubbles or surface irregularity. Therefore, drying time of from 1 minute to 48 hours is preferable, from 5 minutes to 10 hours is more preferable, and from 10 minutes to 5 hours is particularly preferable.

The solid electrolyte without crosslinking treatment obtained after the coating process has preferably a plate-like form or a membrane-like form, whose thickness is preferably 10-500 μm, and particularly preferably 25-150 μm. It may be in a form of plate or membrane at the time point when it is molded, or may be molded into a bulk body and then cut and fabricated into a form of plate or membrane.

In the invention, an aligning step of a mesogen may be added prior to the crosslinking step. In order to facilitate the alignment, various schemes may be employed. For example, an alignment treatment may be provided in advance to the aforementioned support or the like. As the alignment treatment, various common methods may be employed and, preferably, such methods may be employed as providing a liquid crystal alignment layer such as various polyimide-based alignment membranes and polyvinylalcohol-based alignment membranes on a support or the like and performing such methods as alignment treatment such as rubbing, applying a magnetic field, electric field or the like to a sol-gel composition on the support, and heating an object.

The alignment state of the material of the invention can be checked by observing optical anisotropy with a polarization microscope. Any observation direction may be acceptable. If there is a portion where brightness and darkness are switched when a sample is rotated between crossed Nichols, it can be said that anisotropy exists. There is no particular restriction to an alignment state as long as it is a state representing anisotropy. When a texture capable of being recognized as a liquid crystal phase is observed, the phase can be identified, and both of the lyotropic liquid crystal phase and the thermotropic liquid crystal phase may be acceptable. As for the alignment state, in the case of the lyotropic liquid crystal phase, the hexagonal phase, the cubic phase, the lamellar phase, the sponge phase and the micellar phase are preferable, and in particular, representing the lamellar phase or the sponge phase at room temperature is preferable. In the case of the thermotropic liquid crystal phase, the nematic phase, the smectic phase, the crystal phase, the columnar phase and the cholesteric phase are preferable, and in particular, representing the smectic phase or the crystal phase

at room temperature is preferable. In addition, an alignment state in which the alignment in these phases is kept in a solid state is also preferable. The anisotropy referred to here means a state in which directional vectors of molecules are not isotropic.

Further, a surface treatment may be performed after performing the crosslinking step. As for the surface treatment, surface roughening, surface cutting, surface removing or surface coating may be performed, which may, in some cases, improve adherence with an electrode.

(Second reaction process)

The second reaction process includes a crosslinking process via, for example, the substituent $R^{32}$ in the formula (3). In the second reaction process, the obtained membrane may be subjected to a heating treatment or a radiation (visible light, ultraviolet light, y ray, electronic ray etc.) exposure treatment under humidity-conditioned circumstances, if necessary, to promote the crosslinking reaction.

In the case of performing crosslinking through thermal treatment, a higher temperature terminates the treatment in a shorter time, and is preferable from the viewpoint of productivity. On the other hand, a too high temperature may lead to decomposition of the material. The treatment temperature can be selected in accordance with properties of the material. It is preferably 40°C-300°C, more preferably 80°C-250°C, and furthermore preferably 100°C-200°C. Although a shorter treatment time is preferable from the viewpoint of productivity, securement of a certain treatment time or more is preferable in order to perform the crosslinking reaction more effectively. Therefore, the treatment time is preferably from 1 minute to 24 hours, more preferably from 5 minutes to 10 hours, and particularly preferably from 10 minutes to 5 hours.

In the case of performing crosslinking by radiation treatment, a greater exposure energy terminates the treatment in a short time and is preferable from the viewpoint of productivity, however, a too great energy requires high cost of exposure equipment. The amount of exposure energy is preferably 1000 W/cm$^2$-0.1 W/cm$^2$, more preferably 100 W/cm$^2$-0.5 W/cm$^2$, and furthermore preferably 30 W/cm$^2$-1 W/cm$^2$. A shorter treatment time is preferable from the viewpoint of productivity, however, a too short time results in insufficient crosslinking reaction. Therefore, the treatment time is preferably from 0.01 minute to 10 hours, more preferably from 0.1 minute to 5 hours, and particularly preferably from 1 minute to 2 hours.

In the crosslinking process, any of reaction schemes including polymerization reaction, photo dimerization reaction and thermal reaction described in the first reaction process may be employed. Thermal reaction, which easily makes high density crosslinking possible, is preferable, in which following groups of atoms (hydroxyl group, maleimide derivatives, a combination of diene and dienophile usable in Diels-Alder reaction etc.) can be used. In particular, a method of employing condensation of hydroxyl groups is particularly preferable from the viewpoint of easiness of introduction and chemical resistance of a hydroxyl group precursor.

For the purpose of removing unnecessary components after the crosslinking step, a washing process with water, an organic solvent or the like and a drying process may be added.

When a polymerizable group capable of forming a carbon-oxygen bond is an alkyleneoxide group such as an ethyleneoxide group and a trimethyleneoxide group, a cationic polymerization initiator is preferable as a polymerization catalyst. As for the polymerization catalyst, those similar to the cationic polymerization initiators described for the first reaction process can be mentioned as preferable examples. In addition, an acid generating agent, a phtoinitiator for photo-cationic polymerization and the like can be mentioned. Specifically, compounds capable of generating sulfonic acid through photodecomposition and onium salts as described in JP-A-2002-29162, JP-A-2002-46361, JP-A-2002-137562 and the like can be mentioned. Further, a compound to which a group or a compound generating these acids has been introduced in a main chain or a side chain of polymer can also be employed. Examples thereof include compounds represented by the formula (CA) or the formula (CB) below.

Formula (CA)

$$\left(E^{11}\right)_{3-n}\overset{+}{S}\left(Ph-E^{12}\right)_n \quad {}^{-}X^{11}$$

In the formula (CA), $E^{11}$ represents an alkyl group, is preferably a straight chain or branched chain alkyl group having 1-6 carbon atoms, more preferably a methyl group, an ethyl group, a propyl group, an isopropyl group, an isobutyl group, a t-butyl group, an isopentyl group or a hexyl group, and furthermore preferably a methyl group, an ethyl group or an isopropyl group. $E^{12}$ is a hydrogen atom or an alkyl group, wherein the preferable range of the alkyl group is the

same as that of $E^{11}$. When plural $E^{11}$s and/or $E^{12}$s exist, respective $E^{11}$s and/or $E^{12}$s may be same with or different from each other. $X^{11}$ is a counter anion of a strong acid, and is preferably tetrabutylborate, hexafluorophosphate, benzenesulfonate, 4-methyl-benzenesulfonate, acetate, methanesulfonate, trifluorosulfonate, perchlorate, benzoate, pentafluorobenzoate or sulfate. n is an integer of 1-3.

Formula (CB)

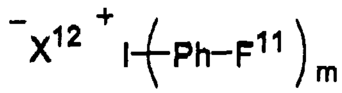

$F^{11}$ represents a hydrogen atom or an alkyl group, having the same meaning and also the same preferable range as $E^{12}$, m is 1 or 2. I represents an iodine atom. $X^{12}$ is a counter anion of the strong acid, having the same meaning and also the same preferable range as $X^{11}$.

Hereinafter, examples of these are mentioned, but the invention is not intended to be limited to these.

C-1 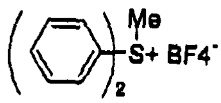

C-6 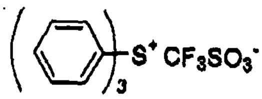

C-2 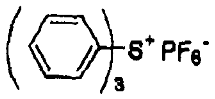

C-7 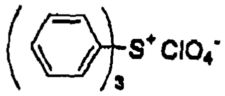

C-3 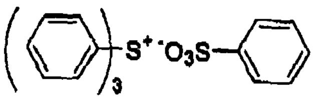

C-8 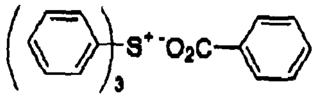

C-4 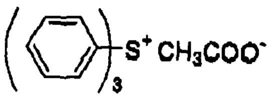

C-9 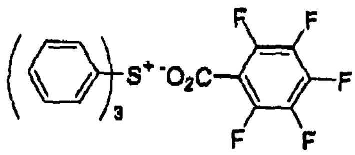

C-5 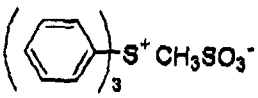

C-10 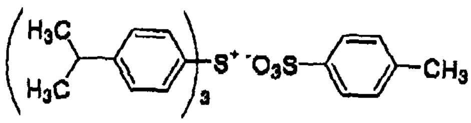

C-11 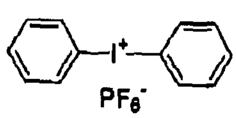

C-16 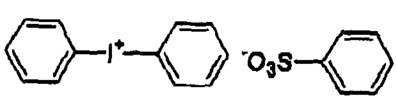

C-12 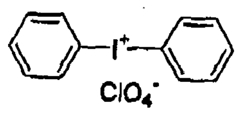

C-17 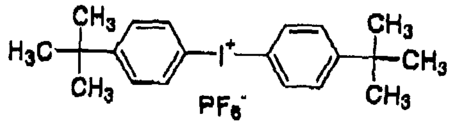

C-13 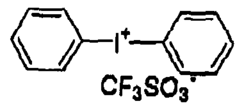

C-18 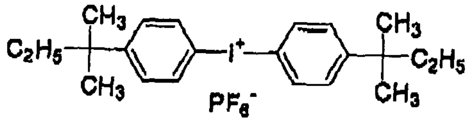

C-14 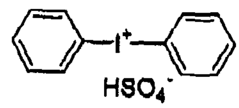

C-19 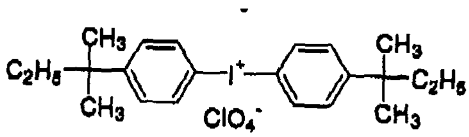

C-15 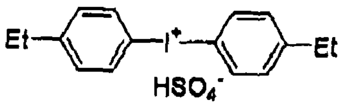

It is preferable to select a suitable reaction temperature of the second reaction process in accordance with a polymerization reaction, When cationic polymerization is employed, it is preferably 50°C-300°C, more preferably 100°C-250°C, and furthermore preferably 120°C-200°C.

For the purpose of removing unnecessary components after the crosslinking process, a washing process with water, an organic solvent or the like and a drying process may be added.

(Ion-exchange process)

In the ion-exchange process, ion-exchange reaction of the acid moiety $A^{11}$ is performed by dipping the obtained membrane in an acidic aqueous solution, if necessary, with heating.

In the ion-exchange process, for example, derivation of $A^{21}$ in the formula (2) to a group containing the acid moiety is performed. In the ion-exchange reaction, a strong acid is preferable, and diluted concentrated hydrochloric acid or diluted concentrated sulfuric acid is more preferable. Specifically, it is an aqueous hydrochloric acid solution of 1N-12N or an aqueous sulfuric acid solution of 1N-12N. To the treatment liquid, an organic solvent or the like may be added.

It is not a fundamental requirement to perform the aforementioned reaction processes in the aforementioned order. For example, they may be performed in an order of the first reaction process, the second reaction process, the membrane-forming process and then the ion-exchange process.

In the aforementioned membrane-forming process, a liquid, which has been prepared by holding a polymer compound to be a raw material at temperatures higher than the melting point of it or by dissolving the compound using a solvent, may be used to form membrane by exclusion molding, or by cast or coating. These operation can be performed by a film-molding machine using rolls such as calendar rolls and cast rolls or a T die, or by a press machine to accomplish press molding. Further, a pulling process may be added to control the thickness of the membrane or improve membrane properties.

Fuel cell

The solid electrolyte in a membrane form (solid electrolyte membrane) of the invention can be used for a membrane and electrode assembly (hereinafter, referred to as "MEA") and a fuel cell employing the membrane and electrode assembly.

Fig. 1 shows an example of a schematic cross-sectional view of the membrane and electrode assembly of the invention. MEA 10 includes a solid electrolyte membrane 11, and an anode electrode 12 and a cathode electrode 13 placed opposite to each other while having the membrane between them. The anode electrode 12 and the cathode electrode 13 are composed of porous conductive sheets (for example, carbon paper) 12a, 13a and catalyst layers 12b,

13b. The catalyst layers 12b, 13b are composed of a dispersed substance prepared by dispersing carbon particles (such as Ketchen black, acetylene black and carbon nanotube) carrying a catalytic metal such as platinum particles in a proton conductive material (for example, Nafion etc.). In order to bring the catalyst layers 12b, 13b into close contact with the solid electrolyte membrane 11, such methods are commonly used that the porous conductive sheets 12a, 13a coated with the catalyst layers 12b, 13b are pressure-bonded to the solid electrolyte membrane 11 by a hot press method (preferably at 120-130°C, 2-100 kg/cm$^2$) or a suitable support coated with the catalyst layers 12b, 13b is transferred and pressure-bonded to the solid electrolyte membrane 11 followed by being sandwiched between the porous conductive sheets 12a, 13a.

Fig. 2 shows an example of the fuel cell structure. The fuel cell has MEA 10, a pair of separators 21, 22 sandwiching the MEA 10 inbetween, a current collector 17 composed of a stainless net attached to the separators 21, 22, and a packing 14. To the separator 21 on the anodic pole side, an anodic pole side opening 15 is provided and, to the separator 22 on the cathodic pole side, a cathodic pole side opening 16 is provided. From the anodic pole side opening 15, gas fuel such as hydrogen and alcohols (methanol etc.) or liquid fuel such as an aqueous alcohol solution is supplied, and from the cathodic pole side opening 16, oxidant gas such as oxygen gas and air is supplied.

For the anode electrode and cathode electrode, a catalyst composed of carbon material carrying an active metal particle such as platinum is used. The particle size of the commonly used active metal falls within 2-10 nm. A smaller particle size is advantageous because it leads to a larger surface area per unit mass to result in a enhanced activity, however, a too small size makes it difficult to disperse the particle without aggregation. Thus, the lower limit is said to be around 2 nm.

Activated polarization in a hydrogen-oxygen system fuel cell is greater for a cathodic pole (air pole) compared with an anodic pole (hydrogen pole). This is because reaction on the cathodic pole (reduction of oxygen) is slower compared with that on the anodic pole. In order to enhance activity of the oxygen pole, various platinum-based bimetals such as Pt-Cr, Pt-Ni, Pt-Co, Pt-Cu, Pt-Fe can be used. In a direct methanol fuel cell which employs an aqueous methanol solution as anode fuel, suppression of catalyst poisoning by CO generating during an oxidation process of methanol is important. For this purpose, platinum-based bimetals such as Pt-Ru, Pt-Fe, Pt-Ni, Pt-Co and Pt-Mo, and platinum-based trimetals such as Pt-Ru-Mo, Pt-Ru-W, Pt-Ru-Co, Pt-Ru-Fe, Pt-Ru-Ni, Pt-Ru-Cu, Pt-Ru-Sn and Pt-Ru-Au can be used.

As for a carbon material for supporting an active metal, acetylene black, Vulcan XC-72, Ketchen black, carbon nanohorn (CNH) and carbon nanotube (CNT) are preferably used.

The functions of the catalyst layer are: (1) to transport the fuel to the active metal, (2) to provide a field for oxidation reaction of the fuel (anodic pole) and reduction reaction (cathodic pole), (3) to transmit electrons generated by oxidation-reduction to the current collector, and (4) to transport protons generated by the reaction to the solid electrolyte membrane. In order to accomplish (1), the catalyst layer must be porous to allow the liquid and gas fuels to penetrate deeply. (2) is borne by the aforementioned active metal catalyst, and (3) is borne by the also aforementioned carbon material. In order to fulfill the function of (4), the catalyst layer is mixed with a proton conductive material.

As for the proton conductive material of the catalyst layer, a solid having a proton-donating group can be used without any restriction, but a polymer compound having an acid moiety used for the solid electrolyte membrane (for example, perfluorocarbon sulfonic acids as represented by Nafion, side-chain phosphorous group poly(meth)acrylates, sulfonated compounds of heat-resistant aromatic polymers such as sulfonated polyetheretherketone and sulfonated polybenzimidazole, etc.) is used preferably. Use of the solid electrolyte of the invention for a catalyst layer is more advantageous because it becomes the same kind of material as the solid electrolyte membrane to enhance electrochemical adhesion between the solid electrolyte membrane and the catalyst layer.

Suitable use amount of the active metal falls within 0.03-10 mg/cm$^2$ from the viewpoint of battery output power and economical efficiency. Suitable amount of the carbon material that carries the active metal is 1-10 times the mass of the active metal. Suitable amount of the proton conductive material is 0.1-0.7 time the mass of the active metal-carrying carbon.

The current collector is also called an electrode base material, a permeable layer or a liner substance, and bears roles of function of current collection and prevention of degradation of gas permeation caused by accumulation of water. Usually, carbon paper or carbon cloth is used, and one having been subjected to polytetrafluoroethylene (PTFE) treatment for the purpose of water repellent finish can also be used.

For manufacturing the MEA, following 4 methods are preferable.

(1) Proton conductive material coating method: wherein a catalyst paste (ink) containing an active metal-carrying carbon, a proton conductive substance and a solvent as fundamental components is directly coated on both sides of the solid electrolyte membrane, to which porous conductive sheets are (thermally) pressure-bonded to manufacture an MEA of 5-layer structure.

(2) Porous conductive sheet coating method: wherein the catalyst paste is coated on the surface of the porous conductive sheet to form a catalyst layer, followed by pressure bonding with the solid electrolyte membrane to manufacture an MEA of 5-layer structure.

(3) Decal method: wherein the catalyst paste is coated on PTFE to form a catalyst layer, followed by transferring the catalyst layer alone to the solid electrolyte membrane to form a 3-layer MEA, to which a porous conductive sheet is pressure-bonded to produce an MEA of 5-layer structure.

(4) Later catalyst carrying method: wherein an ink, in which a carbon substrate not carrying platinum powder has been mixed with a proton conductive material, is coated on a solid electrolyte membrane, a porous conductive sheet or PTFE to form membrane, followed by impregnating platinum ions into the solid electrolyte membrane to reduce and precipitate platinum powder in the membrane, thereby forming a catalyst layer. After the formation of the catalyst layer, MEA is manufactured by the aforementioned methods (1)-(3).

Examples of material that can be used as the fuel for the fuel cell employing the solid electrolyte membrane of the invention include, as anode fuel, hydrogen, alcohols (methanol, isopropanol, ethylene glycol etc.), ethers (dimethylether, dimethoxymethane, trimethoxymethane etc.), formic acid, boron hydride complexes, ascorbic acid and the like. As cathode fuel, oxygen (including oxygen in air), hydrogen peroxide and the like can be mentioned.

For a direct methanol type fuel cell, as anode fuel, an aqueous methanol solution with methanol concentration of 3-64% by mass is used. According to the anode reaction formula ($CH_3OH + H_2O \rightarrow CO_2 + 6H^+ + 6e$), 1 mol of methanol requires 1 mol of water, wherein methanol concentration at the time corresponds to 64% by mass. A higher methanol concentration leads to such advantage that mass and volume of a battery including a fuel tank can be made smaller for the same energy capacity. However, a higher methanol concentration tends to result in noteworthy so-called crossover phenomenon, in which methanol passes through the solid electrolyte membrane and reacts with oxygen on the cathode side to decrease voltage, thereby leading to decrease in output power. Therefore, optimal concentration is determined according to methanol permeability of a solid electrolyte membrane used. The cathode reaction formula of a direct methanol type fuel cell is ($3/2O_2 + 6H^+ + 6e \rightarrow H_2O$), and oxygen (usually oxygen in air) is used as fuel.

There are 2 ways to supply the aforementioned anode fuel and cathode fuel to respective catalyst layers, that is, (1) a method in which they are subjected to controlled circulation using an auxiliary machine such as a pump (active type), and (2) a method in which no auxiliary machine is used (passive type, in which, for example, liquid fuel is supplied by capillary action or free fall; and gas fuel is supplied by exposing a catalyst layer to air). A combination thereof may be possible. Although the former has such advantages that high concentration methanol can be used as fuel by circulating water generated on the cathode side and high output power by air supply can be realized, it has such disadvantage that provision of a fuel supply system hardly allows a cell to be miniaturized. Although the latter has such advantage of possibility of miniaturization, it has such disadvantage that fuel supply easily tends to become rate-limiting, thereby leading to difficulty in outputting high output power.

Generally, single cell voltage of a fuel cell is 1 V or less, therefore, single cells are used in series stacking in accordance with necessary voltage required from load. As for the stacking method, "planar stacking" wherein single cells are aligned on a plane and "bipolar stacking" wherein single cells are stacked via a separator having fuel paths formed on both sides thereof, are used. The former is suitable for a compact fuel cell, because the cathodic pole (air pole) is exposed on the surface, thereby making it easy to take in air and possible to form a thin type stacking. In addition to these, a method is proposed in which, while applying MEMS technology, microfabrication is given to a silicon wafer to form a stacking.

For a fuel cell, various applications are discussed, including automobile use, household use and portable device use. In particular, the direct methanol type fuel cell is expected as an energy source for various portable devices and portable apparatuses, while utilizing such advantages as possibility of miniaturization and weight saving and no need for battery charge. For example, portable devices to which it can be preferably applied include the cellular phone, the mobile notebook computer, the electronic still camera, PDA, the video camera, the handheld gaming device, the mobile server, the wearable personal computer, the mobile display and the like. Examples of the portable apparatus to which it can be preferably applied include the portable generator, the outdoor lighting apparatus, the flash lamp, the electric (assisted) bicycle and the like. In addition, it can preferably be used as a power source for the robot for industrial use or household use, or other toys and games. Furthermore, it is useful as a power source for charging a secondary battery mounted on these devices.

## EXAMPLES

Hereinafter, the invention will be described more specifically based on Examples. Material, use amount, percentage, treatment content, treatment procedure and the like represented in Examples below can be arbitrarily changed as long as the change results in no deviation from the intent of the invention. Accordingly, the scope of the invention is not restricted to the specific examples represented below.

1. Synthesis of monomer

[Synthesis of compound A-3]

15.3 g of 4-vinylbenzyl chloride and 25.2 g of sodium sulfite were mixed in 60 ml of a 50% aqueous methanol solution. After stirring at 80°C for 12 hours, the mixture was cooled to room temperature, and precipitated crystal was filtered to give 15.4 g of compound A-3.

[Synthesis of compound A-7]

5.20 g of lithium hydroxide was dissolved in 200 ml of ethanol, to which 35.6 g of styrene acetate was added. After stirring at room temperature for 1 hour, a 40 ml ethanol solution of 26.8g of 1,3-propane sultone was added and stirred at room temperature for 2 hours. Precipitated solid was filtered, and recrystallized from acetonitrile to give 23.2 g of compound A-7.

[Synthesis of compound B-2]

13. 9 g of 3-ethyl-3-oxetane methanol was dissolved in 120 ml of dimethylformamide, to which 5.0 g of sodium hydride (60%, in oil) was gradually added with stirring at room temperature to generate bubbles. After the end of bubbling, 18.3 g of 4-vinyl chloride was dropped. The reaction mixture was stirred at room temperature for 3 hours, then poured into water, extracted with ethyl acetate, condensed, and then purified by silica gel column chromatography to give 19.0 g of compound B-2.

[Synthesis of compound B-9]

To 600 ml of a 50% aqueous sodium hydroxide solution, 920 ml of hexane and 12.3 g of tetrabutylammonium bromide were added, and then 76.1 g of 3-ethyl-3-oxetane methanol and 500 g of 1,6-hexane dibromide were added. The reaction liquid was stirred at 100°C for 5 hours, which was cooled to room temperature, and then the reaction liquid was poured into water and extracted with hexane. After condensation, it was purified by silica gel column chromatography to give 141 g of 6-(3-ethyl-3-oxetanylmethoxy)-1-hexyl bromide.

60.0 g of sodium was dissolved in 1.5 1 of ethanol, to which 24.3 g of styrene acetate was added. The liquid was stirred at room temperature for 1 hour, to which 40.1 g of the obtained 6-(3-ethyl-3-oxetanylmethoxy)-1-hexyl bromide was added and stirred for 6 hours. The reaction liquid was poured into water, and then extracted with ethyl acetate. After condensation, it was purified by silica gel column chromatography to give 25.1 g of compound B-9.

[Synthesis of compound B-12]

23.5 g of 4,4'-dihydroxynaphthalene was dissolved in 9 ml of DMF, to which 11.5 g of potassium carbonate and 7.0 g of potassium iodide were added, and then 68.8 g of 6-chlorohexanol was added. The reaction liquid was stirred at 110°C for 9 hours, and cooled to room temperature. The reaction liquid was poured into water, and precipitated crystal was filtered. The obtained crude crystal was recrystallized from acetonitrile to give 15.3 g of 4-(6-hydroxyhexyloxy)-4'-hydroxybiphenyl.

10 g of the obtained 4- (6-hydroxyhexyloxy) -4' -hydroxybiphenyl was dissolved in 50 ml of dimethylformamide, to which 10.0 g of potassium carbonate was added, and then 9.5 g of 3-ethyl-3-iodomethyloxetane was dropped with stirring. After performing the reaction at 100°C for 4 hours, the reaction mixture was poured into water and obtained crude crystal was recrystallized from acetonitrile to give 4.0 g of 4-(6-hydroxyhexyloxy)-4'-(3-ethyl-3-oxetanyl)methoxybipheny 1.

3.6 g of 4-(6-hydroxyhexyloxy)-4'-(3-ethyl-3-oxetanyl)methoxybiphenyl was dissolved in dehydrated tetrahydrofuran, which was heated to 60°C and added gradually with 0.55 g of sodium hydride (60%, in oil) with stirring to generate bubbles. After the end of bubbling, 1.57 g of 4-vinylbenzyl chloride was dropped. The reaction mixture was stirred at 60°C for 3 hours, and then poured into water, extracted with ethyl acetate, condensed, and purified by silica gel column chromatography to give 3.6 g of compound B-12.

2. Manufacture of solid electrolyte

[Manufacture of solid electrolyte E-1]

2.06 g of compound A-1 (manufactured by Tokyo Kasei Kogyo Co., Ltd.) and 2.32 g of compound B-2 were

dissolved in 30 ml of DMF, which was added with 43.8 mg of 2,2'-azobis(isobutyronitrile) (AIBN), heated to 80°C and stirred for 6 hours. To the reaction mixture, 50 ml of acetonitrile was added to form a suspension, and then supernatant liquid was removed. 30 ml of additional acetonitrile was added and filtered to give 3.56 g of polymer. The average molecular weight of the obtained polymer was 52000.

200 mg of the obtained polymer and compound C-1 were dissolved in 600 μl of a 50% aqueous isopropyl alcohol (IPA) solution, which was inpoured in a square-shaped frame of 3 cm × 3 cm formed with Teflon (Teflon: registered trademark) tape having thickness of 180 μm on a Teflon base. After evaporating the solvent and drying at 70°C for about 2 hours, ring-opening polymerization of oxetane was performed at 160°C for 2 hours, and then a coated member solidified in a membrane form was peeled off. The obtained membrane was dipped in 3N hydrochloric acid, which was heated at 100°C for 12 hours to perform ion exchange followed by washing with ion-exchanged water and drying to give an opaque and slightly brown solid electrolyte having thickness of 74 μm.

[Manufacture of solid electrolyte E-2]

A membrane was manufactured in the same way as manufacture of the aforementioned solid electrolyte E-1, except for adding 2.18 g of compound A-3 in place of compound A-1.

[Manufacture of solid electrolyte E-3]

A membrane was manufactured in the same way as manufacture of the aforementioned solid electrolyte E-1, except for adding 1,1'-azobis (cyclohexene-1-carbonitrile) in place of AIBN, and 2.48 g of compound A-7 in place of compound A-1.

[Manufacture of solid electrolyte E-4]

A membrane was manufactured in the same way as manufacture of the aforementioned solid electrolyte E-1, except for adding 1,1'-azobis(cyclohexene-1-carbonitrile) in place of AIBN, 2.48 g of compound A-7 in place of compound A-1, and 3.14 g of compound B-9 in place of compound B-2.

[Manufacture of solid electrolyte E-5]

A membrane was manufactured in the same way as manufacture of the aforementioned solid electrolyte E-1, except for adding 1,1'-azobis(cyclohexene-1-carbonitrile) in place of AIBN, 2.48 g of compound A-7 in place of compound A-1, and 4.87 g of compound B-12 in place of compound B-2.

A thin membrane section of this sample was prepared and observed under a polarization microscope, whereby a fine domain with optical anisotropy was observed. The result taught us that the membrane is composed of assemblage of aggregates in which mesogen portions are integrated unidirectionally.

[Manufacture example of solid electrolyte (R-1)]

A membrane was manufactured in the same way as manufacture of the aforementioned solid electrolyte E-1, except for adding 2.48 g of compound A-7 in place of compound A-1, and 4.87 g of p-divinylbenzene (p-DVB) in place of compound B-2.

Molecular weight and membrane thickness of the intermediate polymers obtained above are listed in Table 1.

Table 1

| Solid electrolyte | Monomer A | Monomer B | Molecular weight of polymer | Membrane thickness (μm) | Remarks |
|---|---|---|---|---|---|
| E-1 | A-1 | B-2 | 59000 | 88 | Invention |
| E-2 | A-3 | B-2 | 37000 | 94 | Invention |
| E-3 | A-7 | B-2 | 48000 | 92 | invention |
| E-4 | A-7 | B-9 | 53000 | 102 | Invention |
| E-5 | A-7 | B-12 | 38000 | 98 | Invention |

(continued)

| Solid electrolyte | Monomer A | Monomer B | Molecular weight of polymer | Membrane thickness (μm) | Remarks |
|---|---|---|---|---|---|
| R-1 | A-1 | p-DVB | 16000 | 106 | Comparative example |

3. Test

[Ion conductivity]

The solid electrolytes of the invention E-1 - E-5, and the comparative solid electrolyte R-1 obtained above, and Nafion 117 (manufactured by DuPont) were punch cut into a circle of 13 nm in diameter, each of which was set between 2 stainless plates to measure ion conductivity at 25°C and relative humidity of 95% by the alternating-current impedance method. A greater value is better.

[Methanol diffusivity]

Each of the samples was cut out into 1 cm × 1 cm and set in a cell as shown in Fig. 3. In Fig. 3, 31 represents a solid electrolyte, 32 represents Teflon tape reinforcing material, 33 represents an injecting portion for an aqueous methanol solution, 34 represents a feed opening for carrier gas, and 35 represents a detection opening. The arrow in the drawing shows flow of the carrier gas. Then, a 50 weight % aqueous methanol solution was injected as an aqueous methanol solution, and then methanol contained in the carrier gas was detected by gas chromatography (manufactured by Shimadzu Corporation, GC-14B). From the detected value, diffusion coefficient $D_{MeOH}$ was calculated using the following formula. Diffusivity of methanol was calculated as a relative value to the detected value for Nafion 117 (manufactured by DuPont). A smaller value is better.

$$D_{MeOH} = (N \times T) / (A \times C_{MeOH})$$

Diffusion coefficient: $D_{MeOH}$ ($cm^2/s$)
Transmission detected value: N (mol/s)
Membrane thickness: T (cm)
Area of the sample contacting to the aqueous methanol solution: A ($cm^2$)
Methanol concentration: $C_{MeOH}$ (mol/s)

[Tensile strength]

Each of samples was cut out into 2.5 cm × 1 cm to be subjected to strength test by tension according to JIS K-7127. Tensile strength at breaking of the sample was recorded as strength thereof. A greater value is more preferable.

[Pressure strength]

The solid electrolytes E-1 - E-5 and the comparative solid electrolyte R-1 were cut out into a circle of 13 mm in diameter, each of which was set between 2 stainless plates and applied with pressure of up to 550 MPa, which is generated upon manufacturing MEA (membrane and electrode assembly) for a fuel cell, by using a manual membrane pressure measurement device to check whether it had been broken. Here, since a threshold limit value (value at which break occurs) of the pressure strength exceeding 600 could not be measured, it is shown as "r>600."

Table 2

| Solid electrolyte | Ion conductivity (S/cm) | Methanol diffusion coefficient ($10^{-8}cm^2/s$) | Tensile strength (Mpa) | Pressure strength ($Kgf/cm^2$) | Remarks |
|---|---|---|---|---|---|
| E-1 | $1.73 \times 10^{-2}$ | 0.2 | 45 | 500 | Invention |

(continued)

| Solid electrolyte | Ion conductivity (S/cm) | Methanol diffusion coefficient ($10^{-8}cm^2/s$) | Tensile strength (Mpa) | Pressurestrength ($Kgf/cm^2$) | Remarks |
|---|---|---|---|---|---|
| E-2 | $2.45\times10^{-2}$ | 0.18 | 47 | 550 | Invention |
| E-3 | $2.32\times10^{-2}$ | 0.12 | 48 | 550 | Invention |
| E-4 | $2.71\times10^{-2}$ | 0.09 | 48 | >600 | Invention |
| E-5 | $2.93\times10^{-2}$ | 0.08 | 49 | >600 | Invention |
| R-1 | $2.20\times10^{-3}$ | 2.8 | 11 | 300 | Comparative example |
| Naflon | $2.20\times10^{-3}$ | 2.1 | 42 | >600 | Comparative example |

For the solid electrolytes of the invention, it was recognized that the ion conductivity, strength and durability are high, and that, among others, the methanol diffusivity is very low. In particular, E-5 that contains a mesogen represented excellent properties. Such solid electrolyte can be preferably employed, for example, as a proton conductive membrane (solid electrolyte membrane) for a fuel cell.

4. Manufacture of a fuel cell

(1) Manufacture of a catalyst membrane

(1-1) Manufacture of catalyst membrane A

2 g of platinum-carrying carbon (50% by mass of platinum is carried on Vulcan XC72) and 15 g of a Nafion solution (5% aqueous alcohol solution) were mixed and then dispersed by an ultrasonic dispersing device for 30 minutes. The dispersion had an average particle size of about 500 nm. The obtained dispersion was coated on carbon paper (thickness 350 μm) and dried, then the carbon paper was punch cut into a circle of 9 mm in diameter to manufacture catalyst membrane A.

(1-2) Manufacture of catalyst membrane B

To 300 mg of platinum/ruthenium-carrying carbon (20% by mass of platinum and 20% by mass of ruthenium were carried on Ketchen black) having been wetted with 0.3 ml of water, SOL-1 (0.8 ml) prepared in Example 1-(1) was added, which was then dispersed by a ultrasonic dispersing device for 10 minutes. The obtained paste was coated on carbon paper (thickness 350 μm) and dried, and the carbon paper was punch cut into a circle of 9 mm in diameter to manufacture catalyst membrane B.

(2) Manufacture of MEA

To both sides of each of the solid electrolytes E-1 - E-5, the proton conductive membrane R-1 for comparison manufactured in Example 1, and Nafion 117, the catalyst membrane A obtained above was attached so that the coated face thereof contacted to the solid electrolyte, which was thermally pressure-bonded at 80°C and 3 MPa for 2 minutes to manufacture MEA-1-1 - 1-5 and 2-1 - 2-2.

(3) Fuel cell properties

Each of MEAs obtained in (2) was set to a fuel cell shown in Fig. 2, and a 50% by mass aqueous methanol solution was poured into the anode side opening 15. At that time, the cathode side opening 16 was set so as to contact with air. Between the anode electrode 12 and the cathode electrode 13, constant current of 5 $mA/cm^2$ was applied by a galvanostat and cell voltage at that time was measured.

Table 3

| Proton electrolyte membrane | MEA | Time varlaijon of terminal voltage (V) | | | Remarks |
|---|---|---|---|---|---|
| | | Initial | After 0.5 h | After 1 hr | |
| E-1 | 1-1 | 0.60 | 0.59 | 0.57 | Invention |
| E-2 | 1-2 | 0.62 | 0.60 | 0.59 | Invention |
| E-3 | 1-3 | 0.63 | 0.81 | 0.59 | Invention |
| E-4 | 1-4 | 0.67 | 0.85 | 0.63 | Invention |
| E-5 | 1-5 | 0.69 | 0.66 | 0.64 | Invention |
| R-1 | 2-1 | 0.52 | 0.48 | 0.44 | Comparative example. |
| Nafion 117 | 2-2 | 0.66 | 0.44 | 0.38 | Comparative example. |

(Results)

Although the initial voltage of a fuel cell using Nafion membrane was high, the voltage decreased in time sequence. The voltage decrease in time sequence is due to so-called methanol crossover phenomenon, in which methanol as fuel supplied to the anode electrode side leaks to the cathode electrode side through the Nafion membrane. On the contrary, it was found that fuel cells manufactured using MEA-1-1 - MEA-1-5, which used the solid electrolyte of the invention, represented stabler voltage and could keep a higher voltage compared with fuel cells manufactured using MEA-2-1 - MEA-2-2.

## Claims

1. A solid electrolyte comprising a domain including an acid moiety and a matrix domain, wherein the domain and the matrix domain form 3-dimensional crosslinking structure comprising a carbon-carbon bond of a polymer main chain and polyether crosslink, and the solid electrolyte has ion conductivity of 0.010 S/cm or more, methanol diffusion coefficient of $4\times10^{-7}$ $cm^2/s$ of less, tensile strength of 40 MPa or more, and pressure strength of 500 $kgf/cm^2$ or more.

2. The solid electrolyte according to claim 1, comprising a repeating unit represented by the formula (1-1) below and a repeating unit represented by the formula (1-2) below:

Formula (1-1)

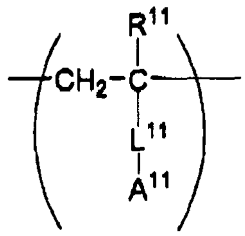

wherein $R^{11}$ represents a hydrogen atom or an alkyl group, $L^{11}$ represents a single bond or a divalent linking group including an alkylene group and/or an arylene group, and $A^{11}$ represents an acid moiety;

Formula (1-2)

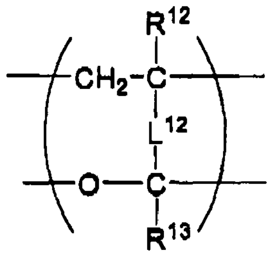

wherein $R^{12}$ represents a hydrogen atom or an alkyl group, $R^{13}$ represents a hydrogen atom, an alkyl group or an aryl group, $L^{12}$ represents a single bond or a divalent linking group including an alkylene group and/or an arylene group.

**3.** The solid electrolyte according to claim 2 wherein $L^{11}$ in the formula (1-1) is a group comprising a mesogen.

**4.** The solid electrolyte according to claim 3 wherein $L^{11}$ in the formula (1-1) is represented by the formula (5) below:

Formula (5)

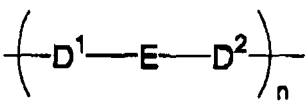

wherein each of $D^1$ and $D^2$ represents a divalent linking group or a single bond, E represents a divalent linking group of a 4-7 membered ring, or a divalent linking group of a condensed ring composed of 4-7 membered rings; and n represents an integer of 1-3.

**5.** The solid electrolyte according to claim 4 wherein E in the formula (5) is a divalent linking group of a 6-membered aromatic group, a 4-6 membered saturated or unsaturated aliphatic group, a 5- or 6-membered heterocyclic group, or a condensed ring thereof.

**6.** The solid electrolyte according to claim 4 wherein E in the formula (5) is represented by any one of the following formulae:

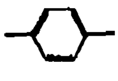

(Y-1)

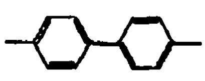

(Y-2)

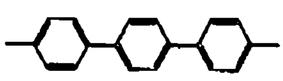

(Y-3)

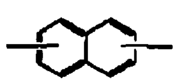

(Y-4)

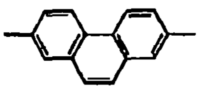

(Y-5)

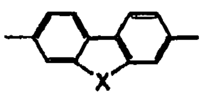

X = $CH_2$,O,CO,NH

(Y-6)

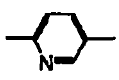

(Y-7)

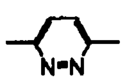

(Y-8)

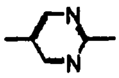
(Y-9)
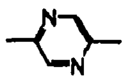
(Y-10)
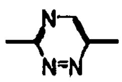
(Y-11)
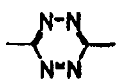
(Y-12)
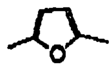
(Y-13)

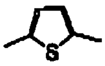
(Y-14)
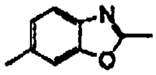
(Y-15)
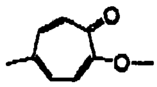
(Y-16)
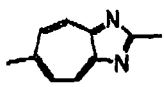
(Y-17)
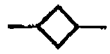
(Y-18)

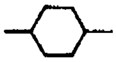
(Y-19)
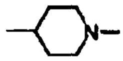
(Y-20)
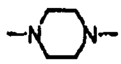
. (Y-21)
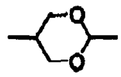
(Y-22)
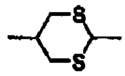
(Y-23)

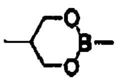
(Y-24)
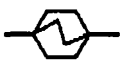
(Y-25)
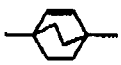
(Y-26)
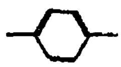
(Y-27)
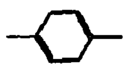
(Y-28)

**7.** The solid electrolyte according to any one of claims 2 to 6 wherein $A^{11}$ in the formula (1-1) is an acid moiety having a pKa of 5 or less.

**8.** The solid electrolyte according to any one of claims 2 to 6 wherein $A^{11}$ in the formula (1-1) is a sulfonic acid moiety, a phosphonic acid moiety or a carboxylic acid moiety.

**9.** The solid electrolyte according to any one of claims 1 to 8 in a membrane form.

**10.** The solid electrolyte according to any one of claims 1 to 9 comprising an optically-anisotropic domain.

**11.** A method for producing a solid electrolyte comprising a domain including an acid moiety and a matrix domain, wherein the domain and the matrix domain form 3-dimensional crosslinking structure comprising a carbon-carbon bond of a polymer main chain and crosslinked polyether, the solid electrolyte has ion conductivity of 0.010 S/cm or more, methanol diffusion coefficient of $4\times10^{-7}$ $cm^2/s$ of less, tensile strength of 40 MPa or more, and pressure strength of 500 $kgf/cm^2$ or more, and the method comprises forming a polyether by crosslinking reaction.

**12.** The method for producing a solid electrolyte according to claim 11, comprising forming a carbon-carbon bond by polymerization reaction and then forming the polyether by crosslinking reaction.

**13.** The method for producing a solid electrolyte according to claim 11, comprising forming a carbon-carbon bond by polymerization reaction, coating the reaction product and then forming the polyether by crosslinking reaction.

**14.** The method for producing a solid electrolyte according to claim 11, comprising forming a carbon-carbon bond by polymerization reaction, coating and drying the reaction product and then forming the polyether by crosslinking reaction.

**15.** The method for producing a solid electrolyte according to any one of claims 11 to 14, comprising polymerizing a compound represented by the formula (2) below and a compound represented by the formula (3) below:

Formula (2)

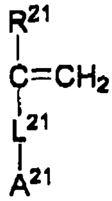

wherein $R^{21}$ represents a hydrogen atom or an alkyl group, $L^{21}$ represents a single bond or a divalent linking group including an alkylene group and/or an arylene group, and $A^{21}$ represents a group including a group derivable to an acid moiety;

Formula (3)

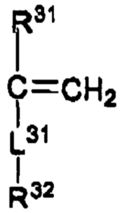

wherein $R^{31}$ represents a hydrogen atom or an alkyl group, $L^{31}$ represents a single bond or a divalent linking group including an alkylene group and/or an arylene group, and $R^{32}$ represents a polymerizable group capable of forming a carbon-oxygen bond.

**16.** The method for producing a solid electrolyte according to any one of claims 11 to 15, comprising crosslinking a polymerizable compound including a repeating unit represented by the formula (4-1) below and a repeating unit represented by the formula (4-2) below:

Formula (4-1)

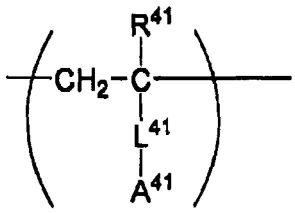

wherein $R^{41}$ represents a hydrogen atom or an alkyl group, $L^{41}$ represents a single bond or a divalent linking group including an alkylene group and/or an arylene group, and $A^{41}$ represents an acid moiety;

Formula (4-2)

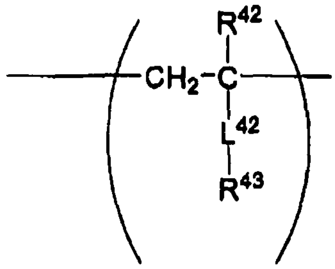

wherein $R^{42}$ represents a hydrogen atom or an alkyl group, $R^{43}$ represents a polymerizable group capable of forming a carbon-oxygen bond, $L^{42}$ represents a single bond or a divalent linking group including an alkylene group and/or arylene group.

**17.** The method for producing a solid electrolyte according to claim 16, wherein the polymerizable compound has a weight-average molecular weight of 3000 or more.

**18.** The method for producing a solid electrolyte according to claim 16, wherein the polymerizable compound has a weight-average molecular weight of 15,000 to 80,000.

**19.** A membrane and electrode assembly comprising a pair of electrodes and the solid electrolyte according to any one of claims 1 to 10 arranged between the electrodes.

**20.** A fuel cell comprising the membrane and electrode assembly according to claim 19.

Fig. 1

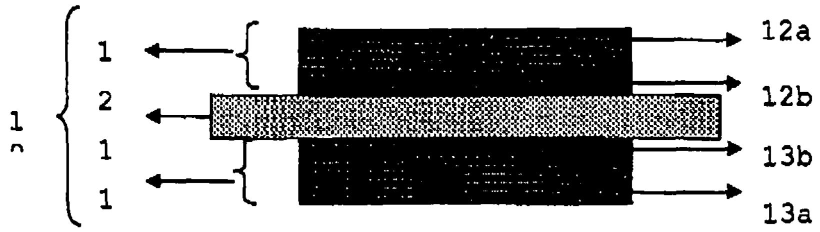


Fig. 2

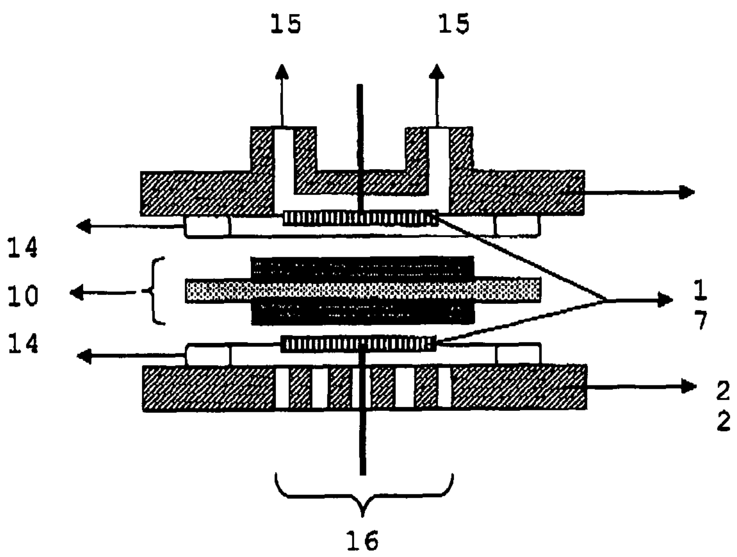

Fig. 3

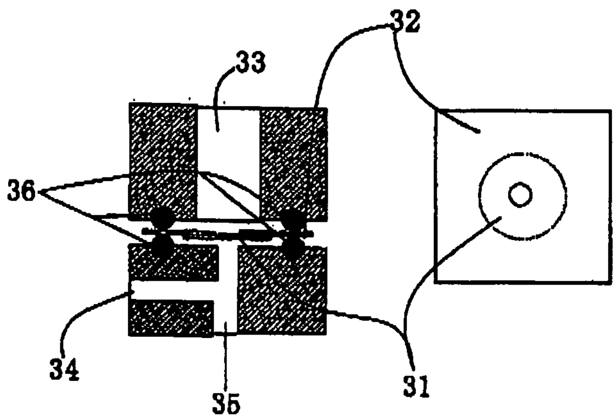

European Patent Office

# EUROPEAN SEARCH REPORT

Application Number
EP 06 00 2494

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/064267 A1 (HEDHLI LOTFI ET AL) 3 April 2003 (2003-04-03)<br>* paragraphs [0020], [0021], [0025] - [0031], [0038], [0039], [0045], [0047] *<br>----- | 1,2, 7-12, 15-20 | INV.<br>H01M8/10<br>H01M10/40<br>C08J5/22 |
| D,A | PATENT ABSTRACTS OF JAPAN vol. 2003, no. 06, 3 June 2003 (2003-06-03) -& JP 2003 055337 A (NIPPON CHEM IND CO LTD; HARAMOTO YUICHIRO), 26 February 2003 (2003-02-26)<br>* abstract *<br>----- | 1-20 | |
| A | US 6 444 343 B1 (PRAKASH G. K. SURYA ET AL) 3 September 2002 (2002-09-03)<br>* the whole document *<br>----- | 1-20 | |

TECHNICAL FIELDS SEARCHED (IPC)

H01M
C08J

The present search report has been drawn up for all claims

3

| Place of search | Date of completion of the search | Examiner |
|---|---|---|
| Munich | 21 April 2006 | Götz, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 06 00 2494

This annex lists the patent family members relating to the patent documents cited in the above-mentioned European search report.
The members are as contained in the European Patent Office EDP file on
The European Patent Office is in no way liable for these particulars which are merely given for the purpose of information.

21-04-2006

| Patent document cited in search report | Publication date | Patent family member(s) | Publication date |
|---|---|---|---|
| US 2003064267 A1 | 03-04-2003 | CA 2369696 A1 | 23-08-2001 |
| | | CN 1362971 A | 07-08-2002 |
| | | EP 1177221 A1 | 06-02-2002 |
| | | JP 2003523419 T | 05-08-2003 |
| | | MX PA01010408 A | 06-05-2002 |
| | | WO 0160872 A1 | 23-08-2001 |
| | | US 2004092661 A1 | 13-05-2004 |
| JP 2003055337 A | 26-02-2003 | NONE | |
| US 6444343 B1 | 03-09-2002 | NONE | |

EPO FORM P0459

For more details about this annex : see Official Journal of the European Patent Office, No. 12/82